# EUROPÄISCHE PATENTANMELDUNG

(11) **EP 2 228 030 A1**
(43) Veröffentlichungstag der Anmeldung: **15.09.2010**
(21) Anmeldenummer: 10168142.7
(22) Anmeldetag: 28.08.2001
(51) Int. Cl.: A61C 1/18

(54) **Medizinisches oder dentalmedizinisches Handstück mit wenigstens einem Drehteil**

(30) Priorität: 21.11.2000 DE 10057861
(62) Teilanmeldung aus: 06023741.9
(71) Anmelder: Kaltenbach & Voigt GmbH, 88400 Biberach (DE)
(72) Erfinder: Lingenhöle, Bernhard, 88447, Warthausen (DE); Kuhn, Bernhard, 88400, Biberach (DE); Eibofner, Eugen, 88400, Biberach (DE)
(74) Vertreter: Thun, Clemens

(57) **Zusammenfassung**

Bei einem Wälzlager (21), insbesondere einem Miniaturwälzlager, für ein medizinisches oder dentalmedizinisches Handstück (3), mit in Laufrillen (22b) angeordneten Wälzkörpern (22) zwischen einem äußeren und einem inneren Laufring (23, 25) ist am stirnseitigen Ende des inneren Laufrings (25) und/oder äußeren Laufrings (23) jeweils ein sich radial nach außen bzw. radial nach innen erstreckender Flansch (23c) und/oder (25c) angeordnet, wobei die Wälzkörper (22) einer Wälzkörperreihe zwischen dem Flansch (23c) oder (25c) des einen Laufrings und der axial gegenüberliegenden Stirnfläche des anderen Laufrings angeordnet sind.

## Beschreibung

Die Erfindung bezieht sich auf ein medizinisches oder dentalmedizinisches Handstück nach dem Oberbegriff des Anspruches 1.

Bei einem vorliegenden Handstück handelt es sich um einen länglichen bzw. stabförmigen Gegenstand, das in seinem vorderen Endbereich ein Werkzeug zur Behandlung des menschlichen oder tierischen Körpers oder eines Modells (Prothese) davon aufweist oder mit einem solchen Werkzeug verbindbar ist und an seinem hinteren Ende mit einer sog. flexiblen Versorgungsleitung verbunden oder durch eine Kupplung verbindbar ist. Durch die Versorgungsleitung ist bzw. sind dem Handstück Antriebsenergie für einen Antriebsmotor und/oder Versorgungsenergie, z.B. für eine Beleuchtungseinrichtung, und/oder Behandlungsmedien zuführbar.

Handstücke der vorliegenden Art gibt es in unterschiedlichen Ausgestaltungen bezüglich der Formgebung und Konstruktion, der Werkzeugart und - bewegung und/oder der Antriebsart. Es gibt Handstücke in Form eines sich gerade oder abgewinkelt erstreckenden Griffteils. Bei dem Werkzeug handelt es sich z.B. um ein Rotationswerkzeug oder um ein hin und her bewegbares Werkzeug. Als Antrieb kann dem Handstück ein mechanischer Antrieb mit einer drehbar gelagerten Antriebswelle oder ein pneumatischer Antrieb mit einer vorzugsweise im vorderen Handstückbereich angeordneten Turbine ausgebildet sein, zu der sich von hinten nach vorne eine Druckluftleitung erstreckt.

Ein vorliegendes Handstück kann somit in jedem Bereich seiner Länge ein drehbar gelagertes Drehteil aufweisen, das für hochtourigen bis niedrigtourigen Funktionsbetrieb ausgebildet sein kann. Ein hochtouriger Funktionsbetrieb wird in den meisten Fällen für ein Werkzeug zur spanabhebenden Bearbeitung, z.B. zur Entfernung von Karies, verwendet. Es gibt jedoch auch Handstücke mit einem Werkzeug, das mit geringer Drehzahl angetrieben wird, z.B. bei solchen Werkzeugen die im Funktionsbetrieb eine Schraubarbeit ausführen, wie es bei der Implantologie zum Setzen und Entfernen von Implantaten der Fall ist.

Ein Handstück nach dem Oberbegriff des Anspruches 1 ist z.B. in der DE-OS 26 18 739 beschrieben. Hierbei handelt es sich um ein sog. Turbinen-Winkelstück, dessen Turbinenrotor durch zwei Kugellager drehbar gelagert ist, die sich zu beiden Seiten eines Turbinenrades des Turbinenrotors befinden.

An ein Handstück der vorliegenden Art sind mehrere Forderungen gestellt. Insbesondere bei einem Handstück für oder mit einem Werkzeug, das im Funktionsbetrieb hochtourig dreht, ist bezüglich des verursachten Geräusches verbesserungsbedürftig, da ein geräuschvoller Betrieb den zu behandelnden Patienten stört. Dies gilt insbesondere für Handstücke, die im Kopfbereich des Patienten benutzt werden, wie es bei dentalmedizinischen Handstücken der Fall ist.

Um zum einen eine handgerechte Baugröße zu erreichen, die zum anderen auch in kleinen Körperhöhlen einsetzbar ist, soll ein vorliegendes Handstück auch von kleiner Bauweise sein, was auch das Drehteil sowie dessen Lagerteile betrifft. Hierbei ist auch zu berücksichtigen, daß bei Gewährleistung der kleinen Bauweise eine einfache und schnell durchführbare Montage bzw. Demontage möglich sein soll.

Zum anderen soll das Handstück zur Verbesserung seiner Marktchancen von kostengünstiger Bauweise sein.

Bei einem Handstück, in dem ein Antriebswellenzug für den Antrieb des Werkzeugs drehbar gelagert ist, ergeben sich im vorderen Endbereich einer sich quer zur Längsachse des Handstücks erstreckenden Werkzeugaufnahme und/oder im Scheitelbereich eines abgewinkelten Handstücks unter Berücksichtigung gewünschter Drehzahlen und/oder der Drehrichtungen besondere Anforderungen.

Der Erfindung liegt deshalb die Aufgabe zugrunde, ein Handstück der im Oberbegriff des Anspruches 1 angegebenen Art hinsichtlich der in Antriebsverbindung miteinander stehenden Antriebswellenabschnitte zu verbessern.

Diese Aufgabe wird durch die Merkmale des Anspruches 1 gelöst. Vorteilhafte Weiterbildungen der Erfindung sind in zugehörigen Unteransprüchen beschrieben.

Bei der erfindungsgemäßen Ausgestaltung nach Anspruch 1 weist das Handstück einen weiteren, nämlich einen mittleren Antriebswellenabschnitt auf, der es ermöglicht, die Drehrichtung des vorderen Antriebswellenabschnitts umzukehren und/oder Drehzahlübersetzungen oder Drehzahluntersetzungen zu verwirklichen. Hierdurch läßt sich das Handstück so verändern, daß es spezielle oder einen größeren Bereich von Anforderungen erfüllen kann und deshalb der Einsatzbereich des Handstücks vergrößert ist.

In den Unteransprüchen sind Merkmale enthalten, die im weiteren zu einer kleinen, kostengünstig herstellbaren, stabilen, vorteilhaft integrierbaren und stabilisierenden Bauweise sichere Funktionen und lange Lebensdauer beitragen.

Nachfolgend werden vorteilhafte Ausgestaltungen der Erfindung anhand von Zeichnungen näher erläutert. Er zeigt:
- Fig. 1: ein erfindungsgemäßes Handstück mit einem Drehteil, das in einem Wälzlager gelagert ist, in der Seitenansicht, teilweise geschnitten;
- Fig. 2: ein Wälzlager in abgewandelter Ausgestaltung als Einzelteil im axialen Schnitt;
- Fig. 3: ein Wälzlager im axialen Schnitt in abgewandelter Ausgestaltung;
- Fig. 4: ein Wälzlager im axialen Schnitt in weiter abgewandelter Ausgestaltung;
- Fig. 5: ein erfindungsgemäßes Wälzlager im axialen Schnitt in weiter abgewandelter Ausgestaltung;
- Fig. 6: ein erfindungsgemäßes Wälzlager im axialen Schnitt in weiter abgewandelter Ausgestaltung;
- Fig.7: den vorderen Endbereich des Handstücks im axialen Schnitt in weiter abgewandelter Ausgestaltung;
- Fig.: 8 ein erfindungsgemäßes Handstück im axialen Schnitt in weiter abgewandelter Ausgestaltung;
- Fig. 9: ein erfindungsgemäßes Handstück im axialen Schnitt in weiter abgewandelter Ausgestaltung;
- Fig. 10: die in Fig. 9 mit X gekennzeichnete Einzelheit in vergrößerter Darstellung;
- Fig. 11: den vorderen Endbereich des Handstücks nach Fig. 9 im axialen Schnitt und in vergrößerter Darstellung.

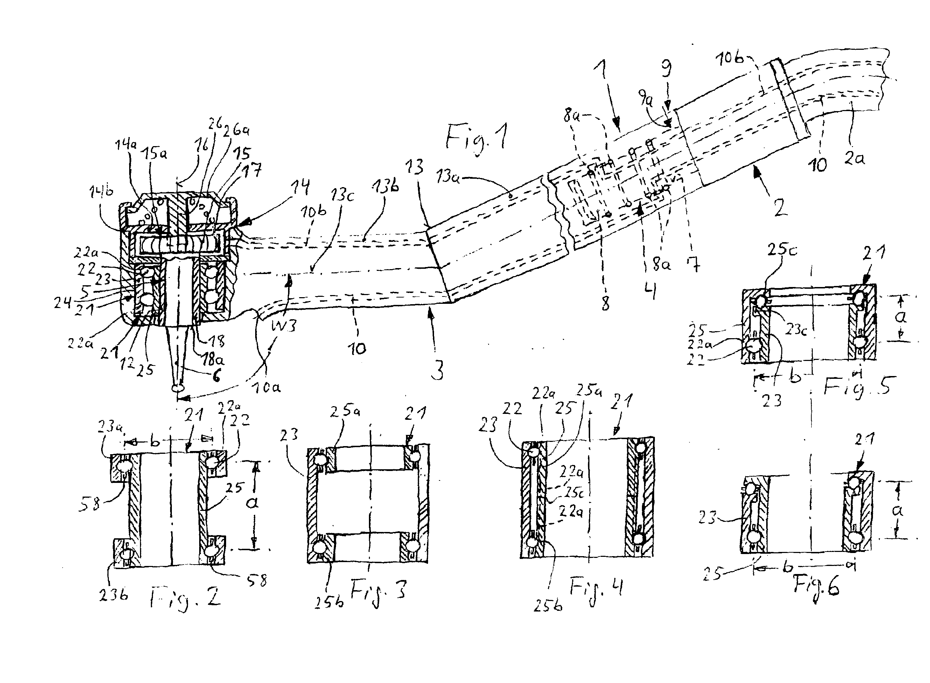

Das in Fig. 1 in seiner Gesamtheit mit 1 bezeichnete Behandlungsinstrument besteht aus einem hinteren Instrumententeil, nämlich einem sogenannten Anschlußteil 2, und einem vorderen Instrumententeil, nämlich dem sogenannten Handstück 3, die durch eine Steckkupplung 4, insbesondere eine Steck/Dreh-Kupplung, lösbar miteinander verbunden sind. Beim vorliegenden Ausführungsbeispiel ist am vorderen Ende des Behandlungsinstruments 1 eine Haltevorrichtung 5 für ein Werkzeug 6 angeordnet, wobei das Werkzeug 6 seitlich oder nach vorne abstehen kann. Das Handstück 3 kann sich gerade oder zur dem Werkzeug 6 abgewandten Seite hin gekrümmt oder winkelförmig erstrecken. Die Steck/Dreh-Kupplung wird durch eine im Querschnitt runde Kupplungsausnehmung 7 und einen darin mit geringem Bewegungsspiel einsteckbaren Kupplungszapfen 8 gebildet. Beim vorliegenden Ausführungsbeispiel ist die Kupplungsausnehmung 7 am hinteren Ende des Handstücks 3 angeordnet, und der im wesentlichen zylindrische Kupplungszapfen 8 erstreckt sich vom Anschlußteil 2 nach vorne. Im gekuppelten Zustand sind die Kupplungsausnehmung 7 und der Kupplungszapfen 8 durch eine Verrastungsvorrichtung 9 lösbar miteinander verrastet.
Diese weist ein Verrastungselement 9a auf, das in dem einen Kupplungsteil radial beweglich gelagert und durch eine Federkraft in eine die Teilungsfuge durchsetzende Verrastungsstellung vorgespannt ist, in der das Verrastungselement 9a in eine Ringnut im anderen Kupplungsteil einfaßt. Eine solche Verrastungsvorrichtung 9 ist durch eine manuelle axiale Zugkraftausübung überdrückbar, wobei das Verrastungselement 9a selbsttätig in seine Freigabestellung verdrängt wird.

Das Anschlußteil 2 ist mit einer flexiblen Versorgungsleitung 2a verbunden, die mit einem nicht dargestellten Steuergerät verbunden ist. Das Handstück 3 ist vorzugsweise auf dem Kupplungszapfen 8 frei drehbar gelagert, wodurch die Handhabbarkeit verbessert wird. Durch die Steck/Dreh-Kupplung 4 erstreckt sich wenigstens eine Medienleitung 10 für ein Behandlungs- oder Antriebsmedium, z. B. Wasser, Druckluft oder ein Wasser/Luft-Gemisch (Spray). Die Medienleitung 10 kann sich axial (nicht dargestellt) oder Z-förmig durch eine radiale (nicht dargestellt) oder hohlzylindrische Teilungsfuge zwischen der Kupplungsausnehmung 7 und dem Kupplungszapfen 8 erstrecken, wobei die Medienleitung 10 die Teilungsfuge im Bereich einer Ringnut im Kupplungszapfen 8 oder in der Kupplungsausnehmung 7 durchsetzt, so daß in jeder Drehstellung der Mediendurchgang gewährleistet ist. Beiderseits vom Durchgang ist die Teilungsfuge durch einen Dichtring 8a abgedichtet, der in einer Ringnut in der Wandung der Kupplungsausnehmung 7 oder in der Mantelfläche des Kupplungszapfens 8 angeordnet sein kann. Hierdurch ist eine freie Drehbarkeit um 360 ° und mehr gewährleistet. Die Medienleitung 10 erstreckt sich vom hinteren Ende des Behandlungsinstruments 1 zu dessen vorderem Endbereich, wobei sie teilweise als Kanal im Instrumentenkörper oder als Schlauch- bzw. Rohrleitung verlaufen kann. Die Medienleitung 10 mündet im vorderen Endbereich des Behandlungsinstruments 1 aus diesem aus, wobei diese Mündungsöffnung 10a auf die Behandlungsstelle bzw. auf die Spitze des Werkzeugs 6 gerichtet ist.

Bei allen Ausführungsbeispielen der Erfindung, bei denen gleiche oder vergleichbare Teile mit gleichen Bezugszeichen versehen sind, weist das Handstück 3 ein darin in einem Wälzlager drehbar gelagertes Drehteil 12 auf. Beim Ausführungsbeispiel nach Fig. 1 handelt es sich um ein sogenanntes Turbinenhandstück mit einem abgewinkelten Schaft 13. Dieser kann einstückig ausgebildet sein oder aus einem hinteren oder vorderen Schaftabschnitt 13a, 13b bestehen, die an der Scheitelstelle des Winkels fest miteinander verbunden sind. Am vorderen Ende des Schaftes 13 befindet sich ein verdickter Kopf 14, in dem eine Turbine angeordnet ist mit einem Turbinenrad 15, das um eine sich quer zum Schaft 13 bzw. zu seiner Längsmittelachse 13c und in der Winkelebene des Schaftes 13 erstreckende Drehachse 16 drehbar im Kopf 14 gelagert ist. Das Turbinenrad 15 befindet sich in einer Turbinenkammer 17, in die eine Medienleitung 10b für Druckluft mündet und auf die Schaufeln des Turbinenrades 15 gerichtet ist. Das Turbinenrad 15 ist mit der Haltevorrichtung 5 verbunden, hier mit einer Aufnahmehülse 18, in die das Werkzeug 6 mit seinem Schaft einsteckbar und in an sich bekannter Weise durch eine Fixiervorrichtung lösbar fixierbar ist. Das Turbinenrad und die Aufnahmehülse 18 können einteilig ausgebildet sein. Beim Ausführungsbeispiel nach Fig. 1 ist das Turbinenrad 15 an dem der Stecköffnung 18a ab gewandten Ende der Aufnahmehülse 18 mit dieser verbunden. Zur Drehlagerung des aus dem Turbinenrad 15 und der Aufnahmehülse 18 bestehenden Turbinenrotors 15a ist ein zweireihiges Wälzlager 21 mit in zwei Reihen angeordneten Wälzkörpern 22, z. B. Kugeln, vorgesehen, dessen hohlzylindrische Außenlagerhülse 23 in einer Querbohrung 24 im Kopf 14 sitzt und dessen hohlzylindrische Innenlagerhülse 25 auf der Aufnahmehülse 18 sitzt. Es handelt sich um ein bezüglich des Turbinenrads 15 einseitig und werkzeugseitig angeordnetes Drehlager. Auf der der Werkzeugseite abgewandten Seite des Turbinenrades 15 ist der Turbinenrotor 15a nicht gelagert. Die Lagerhülsen 23, 25 weisen an ihrer Innen- bzw. Außenmantelfläche jeweils in der zugehörigen Querebene der Reihe Laufrillen 22a auf, in denen die Wälzkörper 22 umlaufen können. Zwischen der Turbinenkammer 17 und der Querbohrung 24 ist eine Ringdichtung zur Abdichtung des Wälzlagers 21 vorgesehen, die aus Vereinfachungsgründen nicht dargestellt ist. Auf der der Werkzeugseite abgewandten Seite des Turbinenrades 15 ist die Turbinenkammer 17 durch eine radiale Kopfwand 14a abgedeckt. Bei dieser Kopfwand 14a kann es sich um ein besonderes Bauteil handeln, das in Form eines Gehäuses 14b mit dem die Turbinenkammer 17 und die Querbohrung 24 umgebenden Kopfgehäuse verbunden ist, z. B. verschraubt ist. Der Schaft des in der Aufnahmehülse 18 befindlichen Werkzeugs 6 kann von der der Werkzeugseite abgewandten Seite des Kopfes 14 her durch ein koaxiales Loch hindurch mit einem auf dieser Kopfseite angeordneten Lösestift 26 lösbar sein. Der Lösestift 26 ist zwischen einer ausgeschobenen Bereitschaftsstellung und einer eingeschobenen Löseendstellung längs der Drehachse 16 verschiebbar gelagert und durch eine z. B. zwischen der Kopfwand 14a und einem Stiftflansch 26a eingespannte Feder in seine Bereitschaftsstellung vorgespannt und in dieser Stellung axial fixiert. Eine solche Lösevorrichung ist an sich bekannt.

Die Ausführungsbeispiele des Wälzlagers 11 nach den Fig. 2 bis 4 unterscheiden sich vom vorbeschriebenen Ausführungsbeispiel dadurch, daß entweder die Außenlagerhülse (Fig. 2) oder die Innenlagerhülse (Fig. 3) jeweils aus zwei hintereinander angeordneten Außenlagerhülsenteilen 23a, 23b oder Innenlagerhülsenteilen 25a, 25b bestehen, wobei die Lagerhülsenteile einen axialen Abstand voneinander aufweisen können oder wie es Fig. 4 für eine Innenlagerhülse 25 zeigt, aneinanderliegen können. Bei der Ausgestaltung nach Fig. 4 ist es auch möglich, die Laufrillen 22a jeweils zur gemeinsamen Teilungsfuge 25c ausmünden zu lassen, wie es in Fig. 4 andeutungsweise mit Strichpunktlinien dargestellt ist. Eine gemeinsame Teilungsfuge und/oder axial auslaufende Laufrillen können auch in der Außenlagerhülse 23 vorzugsweise symmetrisch angeordnet sein. Bei dieser Ausgestaltung können die betreffenden Außen- oder Innenlagerhülsenteile durch eine axiale Bewegung montiert und jeweils zu dem Wälzlager 21 vervollständigt werden. Bei allen Ausführungsbeispielen nach Fig. 2 bis 4 ist es auch möglich, zueinander gehörige Außen- oder Innenlagerhülsenteile 23a, 23b oder 25a, 25b identisch auszubilden, wodurch die Herstellungskosten sich wesentlich verringern lassen. Je nach Richtung der gewünschten axialen Abstützung für das Wälzlager 11 können die Lagerhülsenteile 23a, 23b 25a, 25b in einander gleicher Orientierung oder in einander um 180 ° verdrehten Stellungen montiert werden können.

Beim Ausführungsbeispiel nach Fig. 5 sind die Wälzkörper 22 der einen Reihe zwischen Flächen der Außen- oder Innenlagerhülse 23, 25 oder Hülsenteile 23a, 23b, 25a, 25b angeordnet, von denen wenigstens die axial äußere Fläche oder beide Flächen an radialen Flanschen 23c, 25c der Außenlagerhülse 23 und der Innenlagerhülse 25 angeordnet sind, und zwar jeweils in einer Laufrille 22b in den einander axial zugewandten Stirnflächen der Flansche 23c, 25c. Bei der dargestellten Ausgestaltung ist der sich von der Außenlagerhülse 23 radial nach innen erstreckende Innenflansch 23c zwischen den Reihen angeordnet und der sich von der Innenlagerhülse 25 radial nach außen erstreckende Außenflansch 25c axial außen von der betreffenden Reihe angeordnet. Es ist auch die umgekehrte Anordnung möglich, bei der der Außenflansch 25c zwischen den Reihen angeordnet ist und der Innenflansch 23c axial außen von der betreffenden Reihe angeordnet ist, wie es Fig. 6 zeigt. Es ist im weiteren auch möglich, die Wälzkörper 22 und die zugehörigen Wälzrillen 22b in der Stirnfläche der kürzeren Außen- oder Innenlagerhülse 23,25 und dem axial gegenüberliegenden Flansch 23c, 25c anzuordnen. Das heißt, es braucht jeweils nur ein Flansch 23c oder 25c vorhanden zu sein.

Ein solches Wälzlager 21 ist bezüglich einer Wälzlagerreihe ein Radiallager und bezüglich der anderen Wälzlagerreihe ein Axiallager. Deshalb kann das Wälzlager 21 bei dieser Ausgestaltung sowohl radiale als auch axiale Lagerkräfte aufnehmen. Es eignet sich deshalb besonders zur Lagerung einer Aufnahmehülse 18 im Kopf 14, die im Funktionsbetrieb nicht nur durch aus den Widerstandskräften des Werkzeugs 6 resultierenden Radialkräften, sondern auch Axialkräften im Funktionsbetrieb belastet wird.

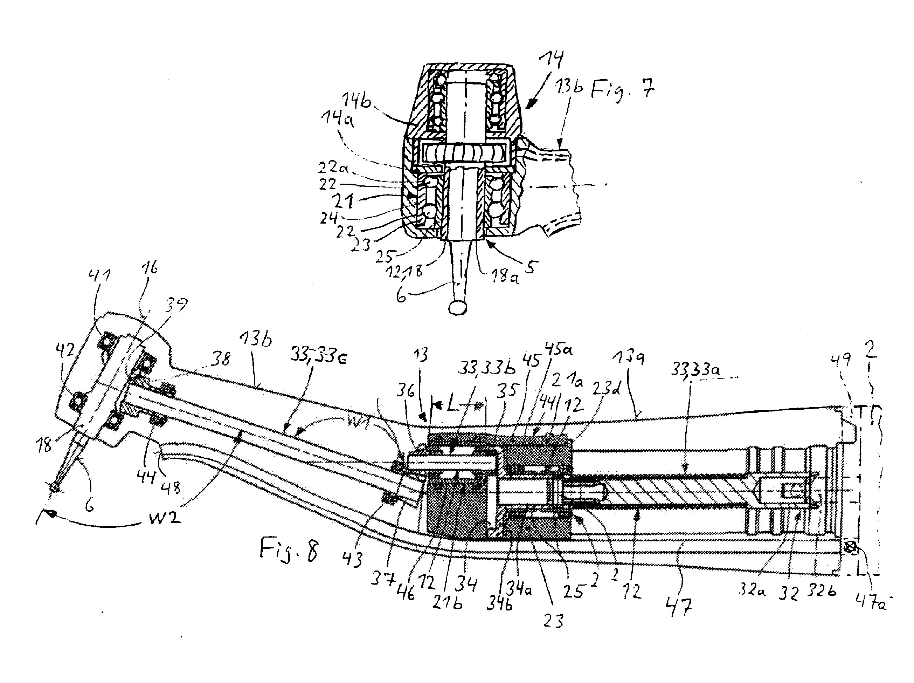

Beim Ausführungsbeispiel nach Fig. 7 ist ein Wälzlager 21 der Ausgestaltung nach Fig. 5 auf der der Werkzeugseite abgewandten Seite des Turbinenrades 15 zur Lagerung der Aufnahmehülse 18 angeordnet. In der Kombination mit einem zweireihigen Wälzlager 21 auf der Werkzeugseite ist diese Lageranordnung besonders vorteilhaft. Es ist jedoch auch möglich, das Wälzlager 21 nach Fig. 5 oder 6 bei einer Aufnahmehülse 18 gemäß Fig. 1 auf der Werkzeugseite des Turbinenrads 15 anzuordnen, z. B. in Kombination mit einem einreihigen Wälzlager, das auf der der Werkzeugseite abgewandten Seite des Turbinenrads 15 bei einer Aufnahmehülse 18 gemäß Fig. 7 angeordnet sein kann. Bei der Ausgestaltung nach Fig. 7 ist eine andere nicht dargestellte Werkzeug-Lösevorrichtung vorgesehen.

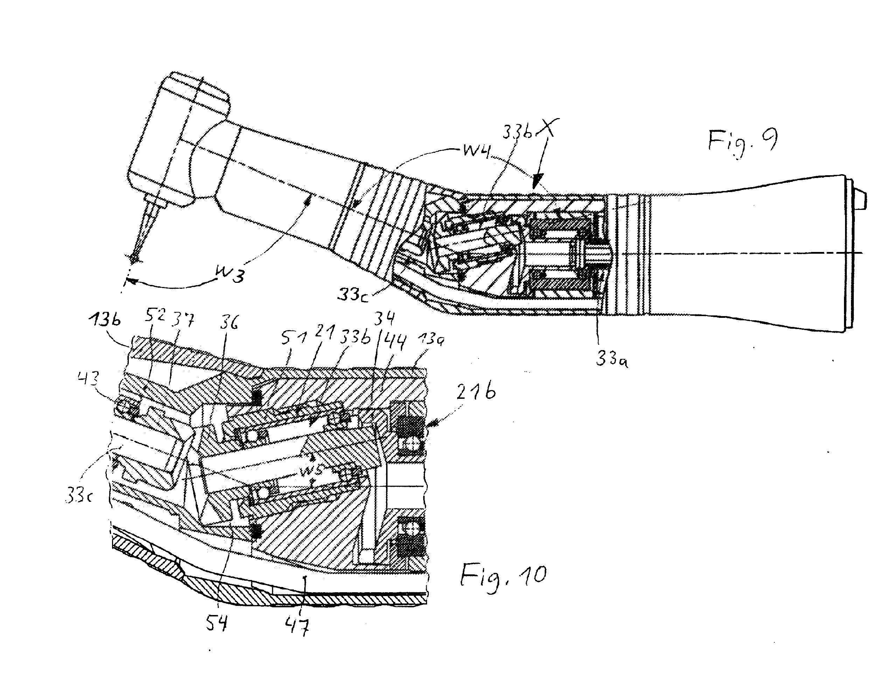

Beim Ausführungsbeispiel nach Fig. 8 und 9 ist das Wälzlager 21 im Schaft 13 zur Drehlagerung eines darin drehbar gelagerten Drehteils 12 angeordnet, hier zur Drehlagerung eines Antriebswellenlängsabschnitts. Bei diesem Behandlungsinstrument ist ein Antriebsmotor (nicht dargestellt) im strichpunktiert ergänzten Anschlußteil 2 angeordnet und durch einen Antriebswellenzug 33 mit mehreren Antriebswellenabschnitten mit der Aufnahmehülse 18 antriebsmäßig verbunden. Im Bereich der Steckkupplung 4 weist der Antriebswellenzug 33 eine Steckkupplung 32 mit zwei formschlüssig miteinander korrespondierenden Steckkupplungselementen 32a, 32b auf, wodurch beim Kuppeln und Entkuppeln der Steckkupplung 4 zugleich ein Kuppeln und Entkuppeln der Steckkupplung 32 möglich ist.

Ein im hinteren Endbereich des Handstücks 3 angeordneter Antriebswellenabschnitt 33a erstreckt sich bis in den Scheitelbereich des abgewinkelten Schaftes 13, wobei sein vorderes Ende durch einen sich im wesentlichen nur im Scheitelbereich axial erstreckenden zweiten Antriebswellenabschnitt 33b antriebsmäßig mit einem dritten Antriebswellenabschnitt 33c verbunden ist, der sich im vorderen Schaftabschnitt 13b bis zur Aufnahmehülse 18 erstreckt und antriebsmäßig mit dieser verbunden ist. Zur Verbindung der Antriebswellenabschnitte 33a, 33b, 33c ist jeweils ein Zahnradgetriebe vorgesehen. Am vorderen Ende des ersten Antriebswellenabschnitts 33a ist ein Zahnrad 34 mit einer Innenverzahnung angeordnet, die mit einem Ritzel 35 am hinteren Ende des zweiten Antriebswellenabschnitts 33b kämmt. Dabei ist der zweite Antriebswellenabschnitt 33b zur dem Werkzeug 6 abgewandten Seite hin versetzt im Scheitelbereich angeordnet, wobei am vorderen Ende des zweiten Antriebswellenabschnitts 33b und am hinteren Ende des dritten Antriebswellenabschnitts 33c jeweils ein Ritzel 36, 37 im wesentlichen in einer Querebene bzw. einander überlappend angeordnet sind, im Sinne von Stirnrädern die miteinander kämmen. Der zweite und der dritte Antriebswellenabschnitt 33b, 33c einen stumpfen Winkel W1 ein, der zur dem Werkzeug 6 abgewandten Seite hin offen ist.

Die Antriebsverbindung zwischen dem dritten Antriebswellenabschnitt 33c und der Aufnahmehülse 18 ist durch ein Winkelzahnradgetriebe mit einem Kegelzahnrad 38 am vorderen Ende des dritten Antriebswellenabschnitts 33c und Kegelzahnrad 39 auf der Aufnahmehülse 18 gebildet. Der Zahneingriff zwischen dem Kegelzahnrädern 38, 39 ist bezüglich des dritten Antriebswellenabschnitts 33c auf dessen dem Werkzeug 6 abgewandten Seite angeordnet. Hierdurch wird die Aufnahmehülse 18 in der gleichen Drehrichtung angetrieben, wie der erste Antriebswellenabschnitt 33a. Die Aufnahmehülse 18 ist mittels zwei Wälzlagern 41, 42 im Kopf 14 drehbar gelagert, die einen längs der Drehachse 16 gerichteten Abstand voneinander aufweisen, der größer ist als das Kegelzahnrad 38, so daß letzteres dazwischen angeordnet werden kann, einschließlich dem Kegelrad 39, das auf der dem Werkzeug 6 abgewandten Seite des Kegelrandes 38 und zugleich auf der dem Werkzeug 6 zugewandten Seite des Wälzlagers 41 angeordnet ist, das vom Werkzeug 6 weiter entfernt angeordnet ist als das andere Wälzlager 42. Zur Drehlagerung des zweiten Antriebswellenabschnitts 33c ist jeweils ein Wälzlager 33, 44 auf den Endbereichen dieses Antriebswellenabschnitts 33c angeordnet, deren Außenringe in einem nicht dargestellten Längsloch des Schaftabschnitts 13b sitzen.

Die Ausgestaltung des Zahnrads 34 als Hohlrad ermöglicht bei radial kleiner Bauweise eine verhältnismäßig große Übersetzung der Drehzahl zwischen dem ersten und dem zweiten Antriebswellenabschnitt 33a, 33b.

Beim Ausführungsbeispiel nach Fig. 8 sind zur Lagerung des ersten Antriebswellenabschnitts 33a und des zweiten Antriebswellenabschnitts 33b jeweils im Schaft 13 ein zweireihiges Wälzlager 21a, 21b vorgesehen. Dieses Wälzlager 21a, 21b reicht jeweils aus, den gesamten Antriebswellenabschnitt 33a bzw. 33b hinreichend stabil zu lagern. Der erste Antriebswellenabschnitt 33a überragt das Wälzlager 21a nach hinten frei abstehend, wodurch eine geringfügige radiale Flexibilität zum Kuppeln mit dem Antriebswellenabschnitt des Anschlußteils 2 vorhanden ist. Zur Vergrößerung der Flexibilität kann zwischen dem ersten Antriebswellenabschnitt 33a und dem Zahnrad 34 eine Gelenkverbindung 28 mit einem Querstift 29 verbunden sein, wodurch die radiale Flexibilität des ersten Antriebswellenabschnitts 33a vergrößert ist. Das Zahnrad 34 besteht aus einem hinteren zylindrischen oder hohlzylindrischen Lagerabschnitt 34a, an dessen vorderem Ende ein Flansch 34b angeordnet ist, der an seiner Vorderseite den Hohlzahnkranz trägt. Beim Ausführungsbeispiel sind die Wälzlager 21a, 21b von der Ausgestaltung gemäß Fig. 3.

Bei allen Wälzlagern 21, 21a, 21b kann der Abstand a der Wälzkörperreihen voneinander vorzugsweise größer bemessen, als der mittlere Durchmesser b der Wälzkörperlaufrillen 22a. Das Wälzlager 21b ist so lang bemessen, siehe L, daß es zwischen die Ritze 35, 36 paßt, wodurch zugleich eine axiale Begrenzung für den zweiten Antriebswellenabschnitt 32b gebildet ist. Bei den Ausführungsbeispielen nach Fig. 5 und 6 kann der Abstand a auch kleiner sein als der mittlere Rillendurchmesser b, da radial nur eine Wälzkörperreihe wirksam ist.

Beide Wälzlager 21a, 21 sind vorzugsweise in einem gemeinsamen Tragkörper 44 gelagert, der im der Scheitelstelle benachbarten Bereich des hinteren Schaftabschnitts 13a im Schaft 13 sitzt und durch ein nach hinten oder nach vorne ausmündendes Aufnahmeloch von hinten montierbar und nach hinten wieder demontierbar ist oder umgekehrt sowie in nicht dargestellter Weise axial fixierbar ist.

Wie sich aus Fig. 8 im weiteren entnehmen läßt, ist das hintere Wälzlager 21a in ein Aufnahmeloch 45a des Tragkörpers 45 von hinten eingeschoben und z. B. durch einen am hinteren Ende der Außenlagerhülse 23 angeordneten Flansch 23d nach vorne hin axial fixiert. Das vordere Wälzlager 21b ist dagegen von vorne in ein Aufnahmeloch 46 des Tragkörpers 45 eingesetzt und axial fixiert. Der Flansch 34 ist im Aufnahmeloch 45a zwischen dem Wälzlager 21a und dem Grund des Aufnahmelochs 45a mit Bewegungsspiel gelagert.

Mit 47 ist ein Lichtleitstab bezeichnet, der in Randnähe des Schaftes 13 in diesem von hinten nach vorne auf das freie Ende des Werkzeug 6 gerichteten Austrittsfenster 48 erstreckt. Im Funktionsbetrieb dieses Handstücks 3 wird Licht von einer Lichtquelle in den Lichtleitstab 47 eingekoppelt, wobei die Lichtquelle 47a auf einem im Anschlußteil 2 drehbar gelagerten Karussell 49 (andeutungsweise dargestellt) angeordnet ist, so daß auch in diesem Falle die freie Drehbarkeit des Handstücks 3 in der Steck/Drehkupplung 4 gewährleistet ist.

Der in Fig. 8 zwischen der Mittelachse des vorderen Schaftabschnitts 13b und der Drehachse 16 der Aufnahmehülse 18 eingeschlossene Winkel W2 beträgt im wesentlichen 100 °. Eine solche Ausgestaltung ist unter Berücksichtigung der Anatomie im Mundraum eines Patienten besonders günstig. Diese günstige Ausgestaltung mit dem Winkels W2 gleich 100° gilt nicht nur für das mit einem Motor im Anschlußteil 2 betreibbare Handstück 3 gemäß Fig. 8, sondern auch für das Turbinen-Handstück 3 gemäß Fig. 1 und das noch zu beschreibende, mit einem Motor im Anschlußteil 2 betreibbare Handstück 3 gemäß Fig. 9, auch wenn letztere mit einem Winkel W3 zwischen dem Schaftabschnitt 13b und der Drehachse 16 von etwa 90 ° dargestellt sind. Ein Winkel zwischen 90 und vorzugsweise 100 ° ist günstig.

Das Handstück 3 nach dem Ausführungsbeispiel gemäß Fig. 9 unterscheidet sich von dem Ausführungsbeispiel nach Fig. 8 durch zwei Hauptmerkmale. Zum einen sind der zweite und der dritte Antriebswellenabschnitt 33b, 33c nicht überlappend angeordnet, sondern ihre aufeinanderzu gerichteten Enden sind einander axial benachbart, wobei ein stumpfer Winkel W4 eingeschlossen wird, der geringer ist als der Winkel W1 und etwa 135 bis 150 ° beträgt. Die Zahnräder 36, 37 kämmen somit im Sinne eines echten Winkelgetriebes mit nach vorne bzw. nach hinten gerichteten Zähnen miteinander, die jeweils auf der dem Werkzeug 6 abgewandten Seite des Umfanges angeordnet sind. Deshalb ist die Drehrichtung des zweiten und des dritten Antriebswellenabschnitts 33b, 33c nicht gegensinnig, wie beim Ausführungsbeispiel nach Fig. 8, sondern gleichsinnig.

Im Unterschied zum Ausführungsbeispiel nach Fig. 8 ist beim Ausführungsbeispiel nach Fig. 9 und 10 der zweite Antriebswellenabschnitt 33b bezüglich des ersten Antriebswellenabschnitts 33a nicht achsparallel angeordnet, sondern er schließt einen spitzen Winkel W5 von etwa 10 bis 20 ° mit diesem ein. Außerdem ist der zweite Antriebswellenabschnitt 33b mit dem Wälzlager 21b in einer hohlzylindrischen Einbauhülse 51 angeordnet, die von vorne in den Lagerkörper 44 einsetzbar, insbesondere einschraubbar ist und mit dem vorzugsweise einteilig an dem zweiten Antriebswellenabschnitt 33b ausgebildeten Ritzel 35, dem Zahnrad 36 und dem Wälzlager 21b eine vorfertigbare Baueinheit bildet.

Wie Fig. 10 zeigt, kann das hintere Ende des dritten Antriebswellenabschnitts 33c mit dem Wälzlager 43 in einer Lagerbuchse 53 gelagert sein, die einteilig vom hinteren Schaftabschnitt 13a in den vorderen Schaftabschnitt 13b vorragt und im Übergangsbereich einen vergrößerten Freiraum 44 für das Zahnrad 36 bzw. auch für die Einbauhülse 52 aufweist.

Zum anderen ist beim Ausführungsbeispiel nach Fig. 9 die Antriebsverbindung zwischen den Kegelrädern 38, 39 nicht auf der dem Werkzeug 6 abgewandten Seite, sondern auf der dem Werkzeug 6 zugewandten Seite des Kegelzahnrads 38 angeordnet, wobei das Kegelzahnrad 39 bezüglich dem Kegelzahnrad 38 auf der dem Werkzeug 6 zugewandten Seite auf der Aufnahmehülse 18 angeordnet ist. Hierdurch ist im Vergleich mit der Ausgestaltung gemäß Fig. 8 die Drehrichtung der Aufnahmehülse 18 umgekehrt, wobei die vorbeschriebene Drehrichtungsumkehr am Zahnradgetriebe 35, 37 kompensiert wird und somit die Drehrichtungen der Aufnahmehülsen 18 beim Ausführungsbeispiel gemäß Fig. 8 sowie 9 wieder gleich sind.

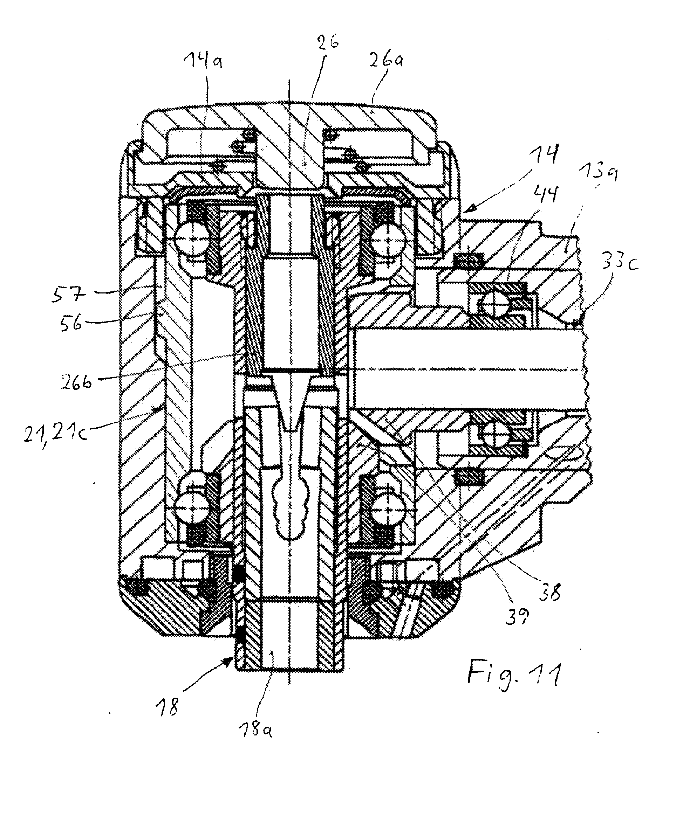

Wie Fig. 11 im weiteren zeigt, ist die Aufnahmehülse 18 im Kopf 14 in einem zweireihigen Wälzlager 21c gelagert, das ebenfalls der Ausgestaltung nach Fig. 3 entspricht, also eine durchgehende Außenlagerhülse 23 aufweist. Das Kegelzahnrad 39 kann mit einem hohlzylindrischen Abschnittträger des zugehörigen Innenlagerhülsenabschnitts 25b sein. In dem dem Werkzeug 6 abgewandten Endbereich der Aufnahmehülse 18, der den zugehörigen Innenlagerhülsenabschnitt 25a trägt, ist ein zusätzlicher Lösestift 26b zum Spreizen einer in der Aufnahmehülse 18 angeordneten Spannhülse 55 axial verschiebbar gelagert und durch den Lösestift 26a von der dem Werkzeug 6 abgewandten Seite her manuell betätigbar. Der dem Werkzeug 6 abgewandte Endbereich der Außenlagerhülse 23 kann im Schraubstutzen 14c des die Kopfwand 14b aufweisenden Kopfgehäusedeckel 14c gelagert sein, wie es Fig. 11 zeigt. Das Wälzlager 21c ist somit ebenfalls von der dem Werkzeug 6 abgewandten Seite her montierbar bzw. demontierbar. Für den Durchgriff des dritten Antriebswellenabschnitts 33c weist die Außenlagerhülse 23 an der betreffenden Seite ein Durchführungsloch 23e auf. Um ein Verdrehen der Außenlagerhülse 23 zu vermeiden, ist eine Drehsicherung für diese vorgesehen, die z. B. durch einen Nocken 56 gebildet sein kann, der in eine Ausnehmung 57 einfaßt. Beim Ausführungsbeispiel ist der Nocken 56 im dem Werkzeug abgewandten Endbereich am Umfang der Außenlagerhülse 23 angeordnet und er faßt in eine axiale Nut in der Wandung der die Außenlagerhülse 23 aufnehmenenden Lagerbohrung ein. Bei dieser Ausgestaltung ist das Drehteil 12 somit durch die Aufnahmehülse 18 gebildet.

Bei allen Ausführungsbeispielen sind den Wälzkörpern 22 zugeordnete Käfige zwischen der Außenlagerhülse 23 und der Innenlagerhülse 25 bzw. den Hülsenteilen 23a, 23b, 25a, 25b vorgesehen.

## Patentansprüche

1. Medizinisches oder dentalmedizinisches Handstück (3) mit einem hinteren und einem vorderen Schaftabschnitt (13a, 13b), die einen stumpfen Winkel einschließen, wobei in den Schaftabschnitten (13a, 13b) jeweils ein Antriebswellenabschnitt (33a, 33c) drehbar gelagert ist, die in Antriebsverbindung miteinander stehen,
**dadurch gekennzeichnet,**
**daß** zwischen dem hinteren und dem vorderen Antriebswellenabschnitt (33a, 33c) ein mittlerer Antriebswellenabschnitt (33b) angeordnet ist, der durch Rädertriebe mit dem hinteren und dem vorderen Antriebswellenabschnitt (33a, 33c) verbunden ist.

2. Medizinisches oder dentalmedizinisches Handstück nach Anspruch 1,
**dadurch gekennzeichnet,**
**daß** der mittlere Antriebswellenabschnitt (33b) bezüglich dem hinteren Antriebswellenabschnitt (33a) parallel versetzt ist oder mit dem hinteren Antriebswellenabschnitt (33a) einen spitzen Winkel (W5) einschließt.

3. Medizinisches oder dentalmedizinisches Handstück nach Anspruch 2,
**dadurch gekennzeichnet,**
**daß** der hintere Antriebswellenabschnitt (33a) an seinem vorderen Ende ein Hohlzahnrad (34) aufweist.

4. Medizinisches oder dentalmedizinisches Handstück nach einem der vorhergehenden Ansprüche,
**dadurch gekennzeichnet,**
**daß** zwischen dem hinteren und dem mittleren Antriebswellenabschnitt (33a, 33b) eine Drehzahlübersetzung besteht.

5. Medizinisches oder dentalmedizinisches Handstück nach einem der vorhergehenden Ansprüche,
**dadurch gekennzeichnet,**
**daß** der mittlere und der vordere Antriebswellenabschnitt (33b, 33c) durch ein Stirnradgetriebe oder ein Kegelradgetriebe in Antriebsverbindung miteinander stehen.

6. Medizinisches oder dentalmedizinisches Handstück nach einem der vorhergehenden Ansprüche,
**dadurch gekennzeichnet,**
**daß** der vordere Antriebswellenabschnitt (33c) an seinem vorderen Ende ein Kegelzahnrad (38) aufweist, das mit einem Kegelzahnrad (39) auf einer quer angeordneten, drehbar gelagerten Aufnahmehülse (18) in Antriebsverbindung steht.

7. Medizinisches oder dentalmedizinisches Handstück nach Anspruch 6,
**dadurch gekennzeichnet,**
**daß** das Kegelzahnrad (39) auf der Aufnahmehülse (18) bezüglich des Kegelzahnrads (38) des vorderen Antriebswellenabschnitts (33c) auf der dem Werkzeug (6) abgewandten Seite (Fig. 8) oder zugewandten Seite (Fig. 11) angeordnet ist.

8. Medizinisches oder dentalmedizinisches Handstück nach einem der vorhergehenden Ansprüche,
**dadurch gekennzeichnet,**
**daß** der vordere Endbereich des hinteren Antriebswellenabschnitts (33a) und der mittlere Antriebswellenabschnitt (33b) in einem gemeinsamen Lagerkörper (44) gelagert sind, der vorzugsweise im hinteren Schaftabschnitt (13a) sitzt.
